Europäisches Patentamt

(19) European Patent Office

Office européen des brevets

(11) Publication number: · **0 017 480**
**B1**

(12) **EUROPEAN PATENT SPECIFICATION**

(45) Date of publication of patent specification: **18.05.83**

(51) Int. Cl.³: **B 62 H 5/02, B 62 L 1/00**

(21) Application number: **80301056.0**

(22) Date of filing: **02.04.80**

(54) **Three-wheeled vehicle parking apparatus.**

(30) Priority: **05.04.79 JP 45085/79**

(43) Date of publication of application:
**15.10.80 Bulletin 80/21**

(45) Publication of the grant of the patent:
**18.05.83 Bulletin 83/20**

(84) Designated Contracting States:
**BE DE FR GB IT NL**

(56) References cited:
**US - A - 3 504 934**
**US - A - 3 583 727**
**US - A - 3 931 989**
**US - A - 3 938 609**

**FIETSEN BROMFIETSEN ONDERDELEN TOEBEHOREN VAKBLAD VOOR HANDEL EN INDUSTRIE, vol. 47, no. 11, 2nd June 1967, pages 462—463 De Gelderlander B.V Nijmegen, NL.**
**"Unieke Britse driewielers"**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Watanabe, Masaki**
**1328-12, Tsuji Urawa-shi**
**Saitama (JP)**
Inventor: **Wakatsuki, Goroei**
**1-9-8, Suwa Fujimi-shi**
**Saitama (JP)**
Inventor: **Suzuki, Keiji**
**4-26-3, Kamikitazawa**
**Setagaya-ku Tokyo (JP)**

(74) Representative: **MacFarlane, John Anthony Christopher et al,**
**HASELTINE LAKE & CO. Hazlitt House 28, Southampton Buildings Chancery Lane London WC2A 1AT (GB)**

Three-wheeled vehicle parking apparatus

This invention relates to parking apparatus provided in a three-wheeled vehicle having one front wheel and two rear wheels; the vehicle having a frame, a front portion of which is swingable relative to a rear portion thereof.

Motor-driven three-wheeled vehicles having one front wheel and two rear wheels are known in which a body frame of the vehicle is separated into front and rear portions, the front portion having the front wheel of the vehicle mounted therein and being swingably connected to the rear portion in which the rear wheels are mounted. By this inter-connection, the front portion may be swung during steering operation while the vehicle is running in order to keep the vehicle from falling. Particular examples of such vehicles are disclosed in U.S. Patent No. 3 504 934, these vehicles having one front wheel and two rear wheels and separate front and rear body frame portions that are relatively swingable. In certain circumstances it is desirable that it should be possible to lock the front and rear body portions against relative swinging and in the vehicle of Figures 9 and 10 of U.S. Patent No. 3 504 934 a locking mechanism is provided whereby the front and rear body frame portions can be locked, by the vehicle rider, against relative swinging to enable the rider to retain the vehicle frame in an upright position when stopped on a cambered road.

A further need for locking the body portions against relative swinging is in parking. Considering parking, a three-wheeled vehicle is, of course, different from a two-wheeled vehicle, which is parked in an inclined position, and it is desirable that a three-wheeled vehicle be provided with a parking brake as is the case with a four-wheeled vehicle. It is also desirable, where the vehicle is of the two-portion frame configuration described above, that it should have locking mechanism for preventing swinging of the front portion relative to the rear portion in order to protect the swinging mechanism during parking.

With the above consideration in mind it is possible to provide separately a parking brake mechanism and a mechanism for locking the front vehicle body frame portion against swinging, but as these mechanism have to be operated separately, the operational complications are doubled, and there is every likelihood that the vehicle used may fail to operate one or other of them. Even if both mechanisms are properly actuated, their release again requires two-fold operation, and the complications involved can lead to a failure to release one of the mechanisms. A particularly serious problem may arise if the vehicle is driven without releasing the locking mechanism, since the front vehicle portion will then not swing when it is desired to turn the vehicle.

According to the present invention there is provided a three-wheeled vehicle having one front wheel and two rear wheels, separate front and rear body portions that are relatively swingable, and a locking mechanism provided between the front and rear body frame portions for locking these portions against relative swinging; characterised in that the locking mechanism is included in a parking apparatus that further includes a braking brake mechanism operable to brake the vehicle, and an operating means adapted for operating both the locking mechanism and the parking brake mechanism. Such a parking apparatus is adapted for operation by a single action to place both the parking brake mechanism and the locking mechanism in effective condition. Only a single operating member has to be actuated to engage or release simultaneously both the parking brake mechanism and the locking mechanism for locking the front vehicle body frame portion relative to the rear vehicle body frame portion. Thus the operability and safety of the vehicle is improved. The single operating member may be mounted under the rider's seat so that the space required for it installation is minimised and it may be easily operated without interfering with normal driving controls of the vehicle. Where the vehicle includes a "neutral" gear mechanism this can be associated with the parking brake mechanism such that upon selecting "neutral" the parking brake mechanism is released temporarily, while the locking mechanism is kept in its operative condition, to permit movement of the vehicle over a short distance without resort to any cumbersome releasing and re-engaging operatios of the locking mechanism. To this end the "neutral" gear mechanism can have an operating member provided on a grip portion behind the rider's seat so that it can easily be manipulated.

For a better understanding of the invention, and to show how the same may be carried into effect, reference will now be made, by way of example, to the accompanying drawings, in which:

Figure 1 is a general side view of a three-wheeled vehicle that is a motorcycle, this motorcycle being equipped with a parking apparatus;

Figure 2 is a top plan view of the motorcycle shown in Figure 1;

Figure 3 is an outline view drawn to a larger scale of a part of the parking apparatus of the motorcycle;

Figure 4 is a longitudinal sectional view of the parking apparatus part shown in Figure 3;

Figure 5 is a transverse sectional view taken along line 5—5 of Figure 4;

Figure 6 is an end view partly in section of a lock plate of the apparatus shown in Figures 4 and 5;

Figure 7 is a fragmentary view schematically showing a modified form of parking apparatus;

Figure 8 is a view taken in the direction of arrow 8 in Figure 7;

Figure 9 is a view taken in the direction of arrow 9 in Figure 7;

Figure 10 is a view similar to Figure 1 but showing a different form of three-wheeled motorcycle;

Figure 11 is a top plan view of the motorcycle shown in Figure 10;

Figure 12 is a fragmentary view of the motorcycle of Figure 10 taken from behind the rider's seat;

Figure 13 is a fragmentary side view of the motorcycle of Figure 10, drawn to a larger scale and showing a locking mechanism of the parking apparatus partly in section;

Figure 14 is a fragmentary top plan view of part of the locking mechanism shown in Figure 13;

Figure 15 is a front view of part of the locking mechanism of Figure 13;

Figure 16 is a longitudinal sectional view of part of an axle including a parking brake; and

Figure 17 is an end view partly in section of a "neutral" gear mechanism.

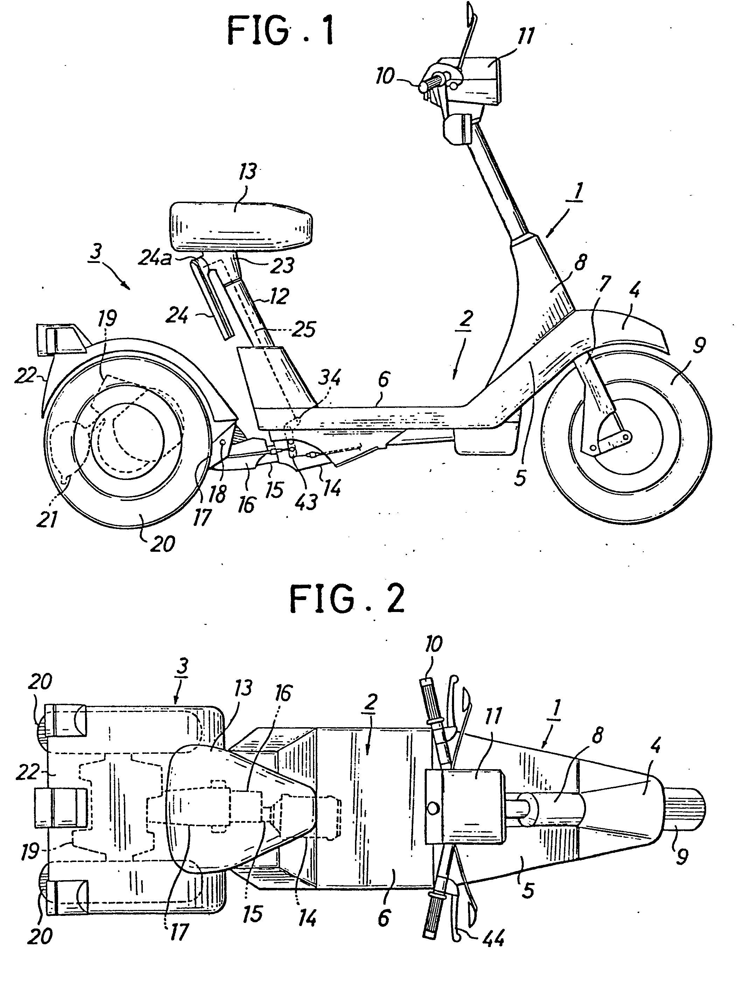

The three-wheeled motorcycle 1 of Figures 1 and 2 will be decribed with reference to its intended direction of forward travel so that vehicle body frame portions 2 and 3 are respectively front and rear portions. The front body frame portion 2, which is of a low-floored construction, includes a front mud guard 4 at its foremost end, a portion 5 downwardly and rearwardly inclined from the rear of the front mud guard 4, and a flat low floor portion 6 extending from the rear of the inclined portion 5. The floor portion 6 has a sufficient width to support the rider's feet during running of the vehicle.

A support post 8 for a front fork 7 extends upwardly from the front portion 5. The front fork 7 extends below this support post 8 and has at its lowermost end a steering front road wheel 9. Above the post 8 there are handlebars 10 and, at the centre of the handlebars, a housing 11 holding a headlight and instruments therein.

At the rear end of the floor portion 6 there is an upwardly extending hollow seat post 12 which supports a rider's seat 13 at its upper end.

A coupling 14 is provided at the rear end of the front body frame portion 2 on the underside thereof. A swinging shaft 15 extending rearwardly from this coupling 14 has a rear subframe 16 of the rear body frame portion 3 connected to its rear end. A rear fork 17, connected to the subframe 16 rotatably about a pin 18, carries a driving unit 19 including an engine and a transmission. The driving unit 19 is disposed between a pair of rear road wheels 20 driven by the unit 19. In the illustrated vehicle, the driving unit 19 is confined within an area defined by a contour surrounding the rear wheels 20. A rear mud guard 22 extends over the driving unit 19 and the rear wheels 20.

A holder 23 supported by the seat post 12 is disposed immediately below the seat 13 and carries a downwardly directed operating lever 24 of parking apparatus consisting of a parking brake mechanism and a locking mechanism that will be described below. The operating lever 24 is pivotably connected to the holder 23 at its upper end 24a, and is inoperative when it extends downwardly parallel to the holder 23 as shown in Figure 1. The lever 24 is rotatable clockwise in Figure 1 about its upper end 24a into a raised operative position in which the parking brake mechanism and the locking mechanism (which is for locking the front body frame portion against swinging) are both in operative condition. The lever 24 operates these mechanisms via an operating rod 25 connected at its upper end to the lever 24 and extending longitudinally through the holder 23 and the seat post 12 to the coupling 14.

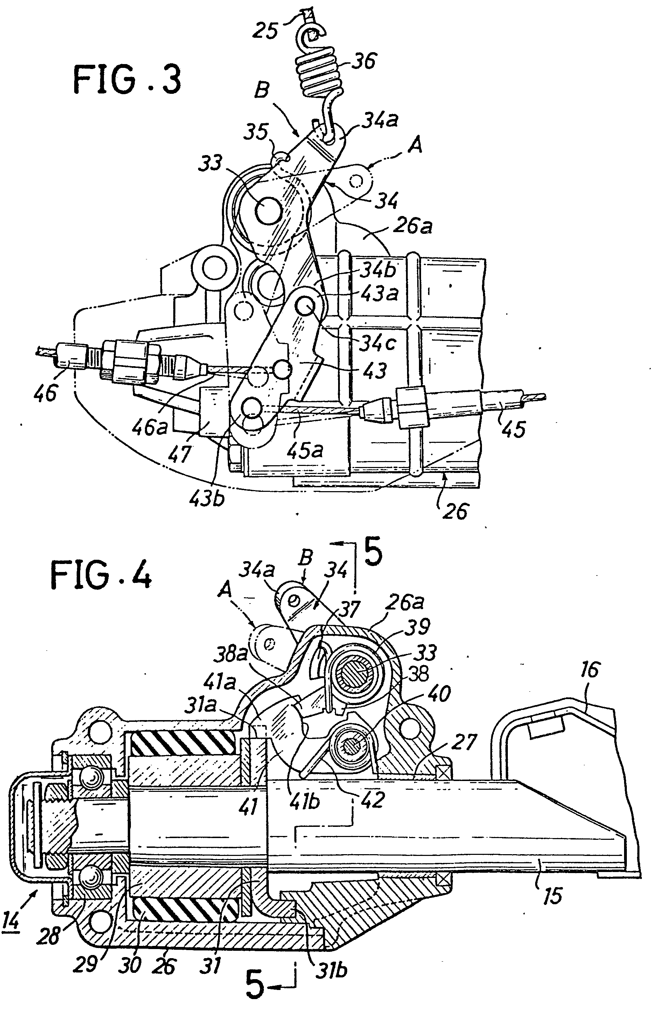

Turning to Figures 3 to 6, the swinging shaft 15 secured to the front end of the rear subframe is supported by bearings 27 and 28 in a case 26 secured to the rear end of the front vehicle body frame portion 2 on the underside thereof, so that the front vehicle body frame portion 2, including the case 26, may swing about the fixed end of the shaft 15. A bulging member 29 is secured on the front portion of the shaft 15 in the case 26 with rubber members 30 interposed between the inner wall of the case 26 and the outer periphery of the bulging member 29, whereby a so-called Neidhart cushion is formed to function as a mechanism for restoring the front vehicle body frame portion when it is swung.

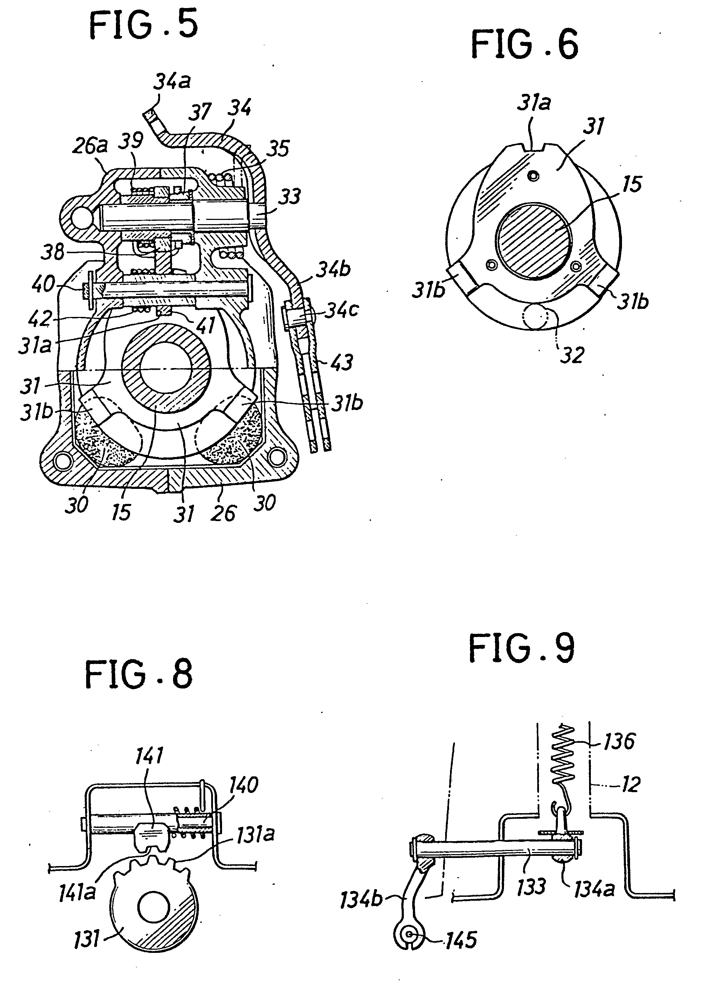

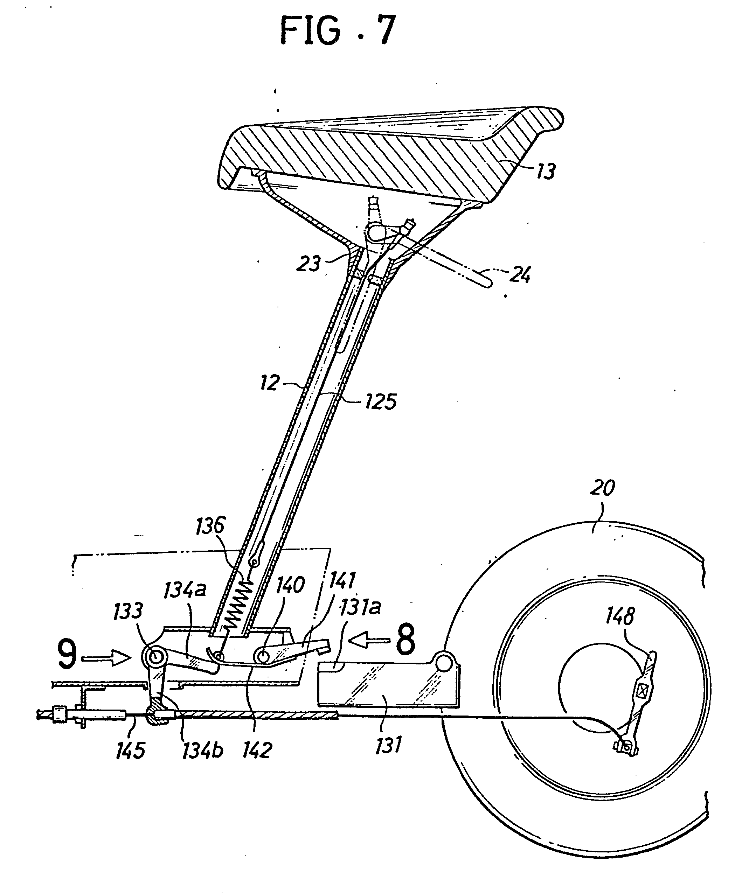

A lock plate 31 secured to the middle portion of the shaft 15 in the case 26 is provided with a locking recess 31a at its upper end, and a pair of symmetrically disposed restraining projections 31b at its base as shown in Figure 6. The case 26 is provided with a stop member 32 which is normally situated midway between the restraining projections 31b, and which is contacted by one or other of the restraining projections 31b upon swinging of the case 26 to define the limits within which the front vehicle body frame portion is swingable about the shaft 15.

The case 26 is formed at its rear end with an upwardly protruding portion 26a defining therein a hollow space across which an operating shaft 33 is transversely mounted. The shaft 33 has one end which projects outwardly from the protruding portion 26a, and to which an L-shaped operating link 34 is secured. A return spring 35 is disposed about the other surface of the protruding portion 26a surrounding the shaft 33, and has one end engaged with the link 34. The link 34 has one end 34a connected to the lower end of the operating rod 25 by a spring 36. A release sleeve 37 is splined or otherwise fitted to the operating shaft 33 in the protruding portion 26a. A push member 38 is rotatably fitted to the middle portion of the sleeve 37, with which one end of a release spring 39 is engaged, and engages the other end of the release spring 39. A support shaft 40, disposed between the shafts 15 and 33, supports the base end of a locking pawl 41 which is usually urged by a return spring 42 towards a disengaged position. The pawl 41 is provided at its free end with a tongue 41a located opposite the locking recess 31a of the lock plate 31 in its normal position. The pawl 41 has a rear surface defining a cam portion 41b located opposite a push end 38a of the push member 38.

Chain lines A in Figures 3 and 4 show the operating link 34 in its inoperative position. If the lever 24 is raised when the vehicle is parked, the rod 25 is pulled, and the link 34 is rotated by the spring 36 into its operative position B shown by solid lines in Figures 3 and 4. The shaft 33 is rotated through a predetermined angle in a clockwise direction as viewed in Figure 4, the pushing member 38 is rotated by the release spring 39, and the cam portion 41b of the pawl 41 is pushed by the push end 38a so that the pawl 41 is rotated about the shaft 40 counterclockwise in Figure 4, overcoming the force of the spring 42. Consequently, the tongue 41a engages the locking recess 31a in the lock plate 31 on the shaft 15 connected to the rear vehicle body frame portion 3. This position of the mechanism is shown in Figure 4, in which the engagement of the pawl 41 provided in the swingable vehicle body frame portion 2 with the lock plate 31 in the stationary rear body frame portion 3 locks the front vehicle body portion 2 against swinging.

As the push member 38 is adapted for rotation by the force of the release spring 39, the pawl 41 is urged into contact with the outer periphery of the lock plate 31 even if it fails to engage the locking recess 31a in the lock plate 31 properly. Therefore, if the front vehicle body portion 2 is swung into its normal position, the tongue 41a is brought into proper engagement with the recess 31a, thereby locking the front vehicle body portion 2 against any further swinging motion.

A brake link 43 is rotatably connected at one end 43a thereof to the other end 34b of the operating link 34 by a pin 34c, while the other end 43b of the link 43 is connected to the inner part 45a of a brake cable 45 leading to a rear brake lever 44 on the handlebars 10 shown in Figure 2. A mid-portion of the link 43 is connected to the inner member 46a of a rear brake cable 46 for braking the rear wheels 20. A stop member 47 provided on the side of the case 26, behind the lower end 43b of the link 43, is in contact with the rear face of this end 43b. Upon operation of the brake lever 44, the cable inner member 45a is pulled and the link 43 is rotated counterclockwise in Figure 3 about the pin 34c at one end 43a thereof, so that the cable inner members 46a leading to the brake on the rear wheels 20 is pulled to the right in Figure 3, thereby accomplishing the normal braking function.

Upon operation of the operating lever 24, the operating link 34 is rotated upwardly into its operative position B, whereby the swinging mechanism is locked as already described, and as the lower end 43b of the link 43 is retained against the stop member 47, the counterclockwise rotation of the lower end 34b of the link 34 causes rotation of the link 43 clockwise about its lower end 43b in Figure 4, whereby the cable inner 46a is pulled to the right in Figure 3. Thus, the brake is operated, and the function of a parking brake is performed by the existing rear brake. This situation is shown in Figure 3.

As described above, a single action of moving the lever 24 operates the parking brake, and also locks the front vehicle body frame portion against swinging relative to the rear body frame portion. No separate operation is required for engaging the parking brake and locking the locking mechanism, but a single simple action activates both the mechanisms simultaneously. Morever, a single operating system provides an interlocking mechanism for performing the aforementioned action in the area where the front vehicle body frame portion is swingably connected to the rear body frame portion. Even if the locking mechanism is not properly actuated after the foregoing procedures for the locking operation have been properly followed, the properly locked position can be obtained if the front vehicle body portion 2 is appropriately swung again.

Attention is now directed to Figures 7 to 9 showing a second form of parking apparatus. In this form a lever 24 carried by a holder 23 for a seat 13 is connected by a cable 125 and a spring 136 with a link 134a that is fast on a pin 133 that also has fast on it another link 134b spaced apart from the link 134a and defining therewith an L-shaped linkage. The links 134a and 134b move in unison with each other, pivotting with the pin 133. The free end of the link 134b is fast with the outer member 146 of a rear brake cable, the inner member 145 of which connects a rear brake 148 and a handlebars mounted brake lever (not shown). This inner member 145 passes freely through the link 134b. The link 134b is normally in contact at its leading face with the vehicle frame so that it is prevented from rotating clockwise (Figure 7).

A member 131 for restraining the swinging of the front vehicle body frame portion 2 is provided in the rear vehicle body frame portion 3, and may, for example, comprise a swinging shaft as already described or a rear subframe, or if a coupling is provided in the rear vehicle body frame portion, the outer member thereof. The restraining member 131 is formed at its front end with a plurality of locking teeth 131a. A locking arm 141 facing the teeth 131a is provided in the front vehicle body frame portion. The arm 141 has a base end supported rotatably on a pin 140, and has a free end formed with a locking recess 141a, which is engageable with any of the teeth 131a. One end of a leaf spring 142 is secured to the underside of the locking arm 141, the other end of the spring 142 bearing on the link 134a.

Upon operation of the rear brake lever from the handlebars the cable inner member 145 is pulled, and the brake 148 is applied in conventional fashion with the link 134b held against clockwise rotation in Figure 7 by its contact with the vehicle frame.

If the operating lever 24, is raised, the link 134a is rotated anti-clockwise by the cable 125 and the spring 136, and simultaneously, the other link 134b is rotated in the same direction to press the cable outer member 146 to move to the right in Figure 7, thereby resulting in braking effect. That end of the spring 142 that bears on the link 134a is rotated clockwise, and the locking arm 141 is rotated clockwise to engage its locking recess 141a with one of the teeth 131a in the rear vehicle body frame portion, whereby the front vehicle body frame portion is locked against swinging. The spring 142 functions as a return spring like the spring 42 in the embodiment hereinbefore described.

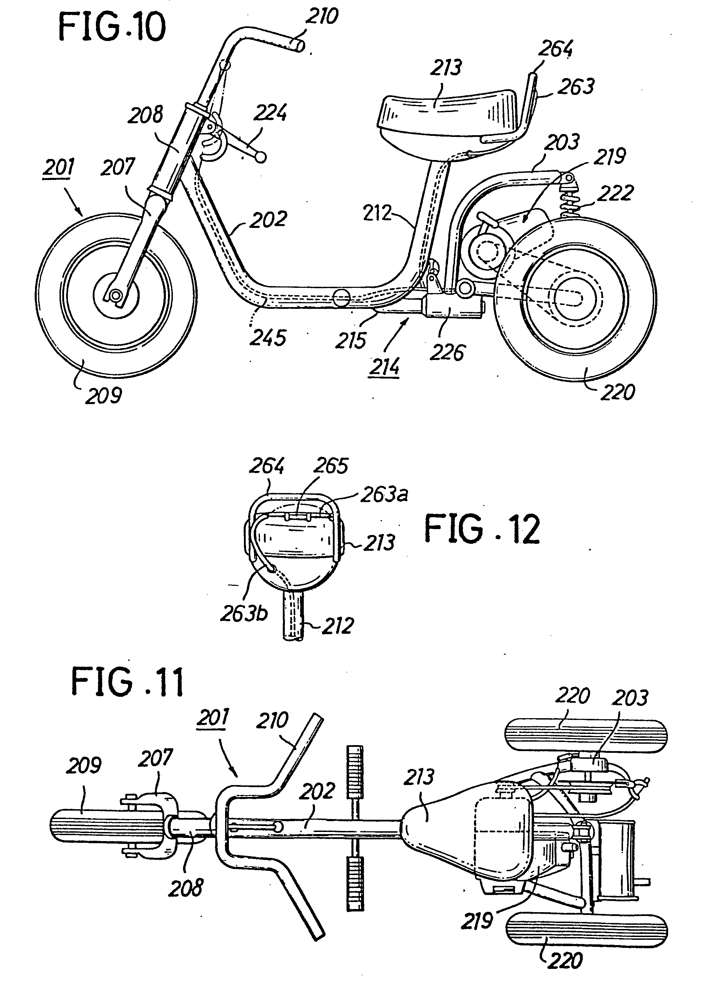

Reference will now be made to Figures 10 to 17. In these Figures there is shown a three-wheeled motor vehicle 201 having a front vehicle body frame portion 202 of tubular construction extending rearwardly from a head tube 208, and having an upwardly extending rear part defining a seat post 212 on which a seat 213 is carried. A front fork 207 extending from the head tube 208 carries a steering front road wheel 209. Above the tube 208 there are handlebars 210. A rear vehicle body frame portion 203, also composed of a combination of tubular materials, carries a driving unit 219, a pair of rear ground wheels 220 driven by a belt and pulley assembly, and a rear suspension unit 222. The rear vehicle body frame portion 203 is provided with a coupling 214 at the bottom of its front end. This coupling includes a shaft 215 connected to the front vehicle body frame portion 202, and a case 226, for the rear end of the shaft 215, which is connected to the rear vehicle body frame portion 203, whereby the front vehicle body frame portion 202 is transversely swingable relative to the rear body portion 203 about the shaft 215.

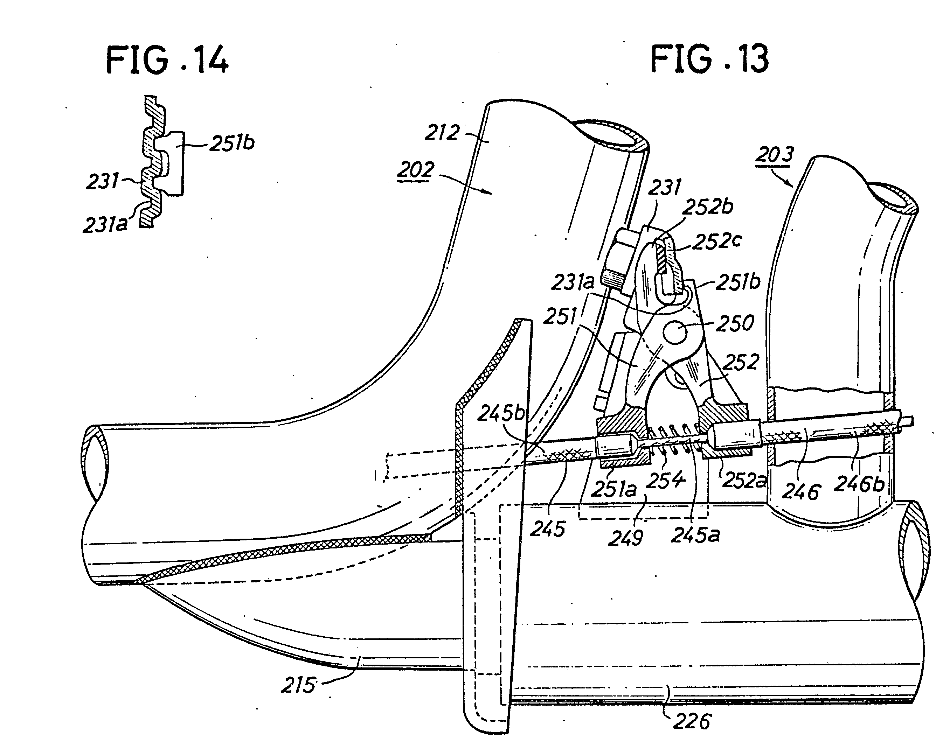

As clearly shown in Figure 13, a bracket 249 is upstanding from the case 226 in the rear vehicle body frame portion 203, and carries a pair of calipers 251 and 252 which are rotatable about a pin 250 to and away from each other. The lower ends 251a and 252a, respectively, are engaged with the facing ends of a pair of parking brake cables 245 and 246, respectively. Effectively the two cables 245, 246 have a common inner member 245a which is movable independently of the outer member 245b of the cable 245 but together with the outer member 246b of the cable 246. A return spring 254 encircling the cable inner member 245a is disposed between the lower ends 251a and 252a of the calipers 251 and 252, respectively, and urges the calipers 251 and 252 away from each other. One caliper 251 has an upper end extending above the pin 250 and formed with a projection 251b, while the other caliper 252 has a flat upper end 252b provided thereon with a cushion member 252c.

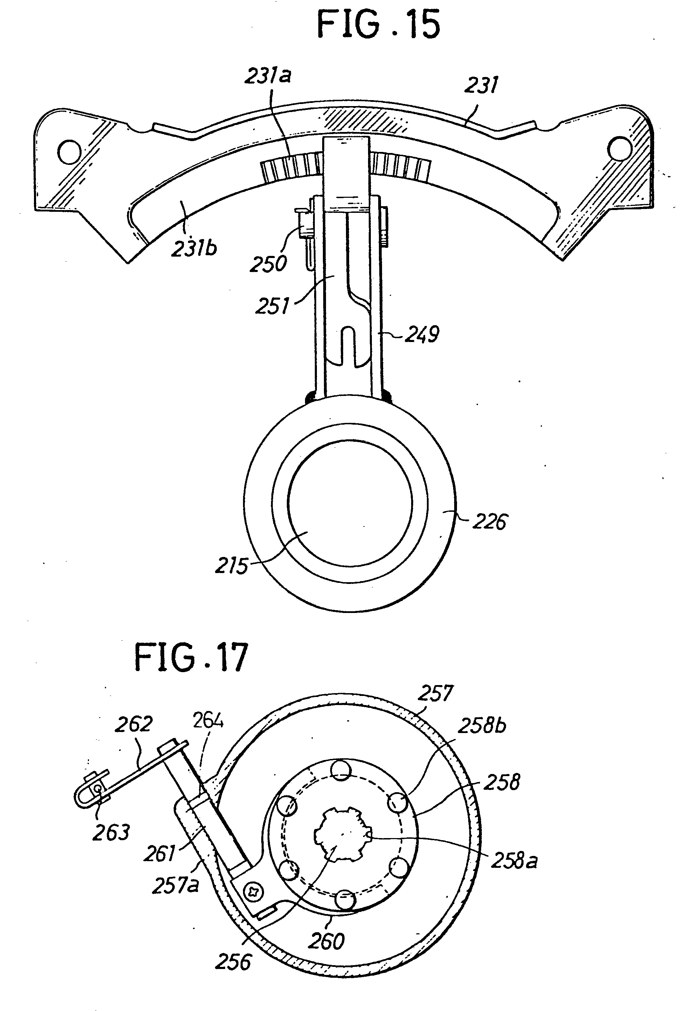

The front vehicle body frame portion 202 is provided at the bottom of its rear end with a fixed lock plate 231 having a plurality of radially concave-convex teeth 231a as shown in Figure 15. That area 231b of the lock plate 231 in which the teeth 231a are formed is so positioned relative to the calipers 251 and 252 that the upper ends 251b and 252b of the calipers 251 and 252, respectively, are normally kept away fron contact therewith.

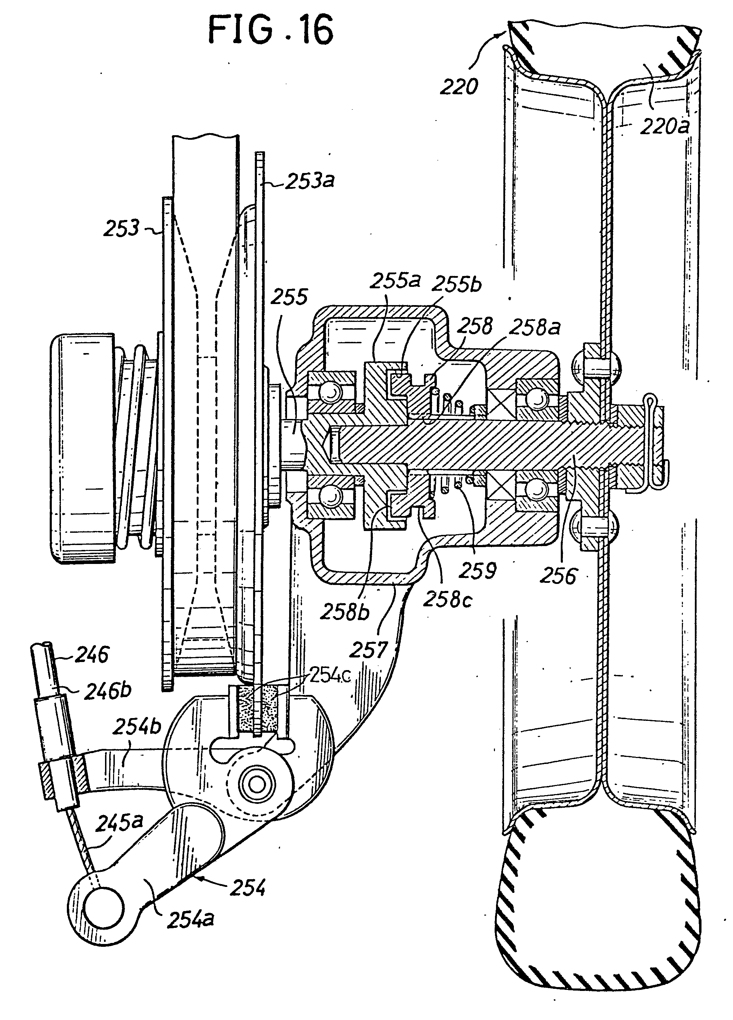

In Figure 16, the cable inner member 245a extending through the cable outer member 246b and connected integrally therewith extends rearwardly, and is engaged with one of calipers 254a and 254b in a disc brake type parking brake unit 254 provided adjacent a flange 253a on a pulley 253 for driving one of the rear wheels 220 which is indicated at 220a. Brake pads 254a facing the opposite sides of the flange 253a are provided on the calipers 254a and 254b at their ends remote from the cable inner 254a.

The cable 245, which extends forwardly through the pipe defining the front vehicle body portion 202, terminates in the region of the head tube 208, where the end of the cable inner member 245a is connected to the base end of an operating lever 224 rotatably supported on the head tube 208 (Figure 10).

If the operating lever 224, is raised, the cable inner member 245a is pulled, and the calipers 251 and 252 are moved towards each other. Consequently, the teeth 231a on the lock plate 231 are clasped between the projection 251b on the one caliper 251 and the cushion member 252c on the upper end 252b of the other caliper 252, whereby the lock plate 231 and the calipers 251 and 252 are engaged with each other to lock the front vehicle body frame portion 202 against swinging relative to the rear portion 203. Simultaneously, the cable 246 pulls the caliper 254 to press the brake pads 254c against the flange 253c on the pulley 253, whereby the parking brake is applied. Figures 13 to 16 show this situation. Thus, a single action accomplishes both locking of the front vehicle body frame portion against swinging, and application of the parking brake, simultaneously.

It may be, however, that it is desired to move the motorcycle a short distance in a garage or elsewhere after the front vehicle body frame portion has been locked against swinging, and the parking brake engaged. The parking apparatus hereinabove described do not permit any such movement, unless the operating lever 224 (in the case of Figures 13 to 16) is released.

In view of this problem, the following features are provided.

One end of an axle 256 is slidably connected to an output shaft 255 of the pulley 253. The output shaft 255 extends into a housing 257, and is provided at its end with a flange 255a defining one half of a dog clutch. The flange 255a has an end surface formed with concavities 255b. A shifter 258, which is formed with projections 258b engageable with the concavities 255b, to constitute the other half of the dog clutch, is splined on the axle 256 at 258a. The shifter 258 is rotatable with the axle 256, but is axially slidable along the axle 256, and is normally urged by a spring 259 into engagement with the flange 255a, thereby achieving the engaged condition of the dog clutch. Normally, therefore, the shifter 258 is effectively connected with the output shaft 255 as shown in Figure 16, so that the output of the pulley 253 is transmitted to the axle 256.

The shifter 258 is formed with a groove 258c along its outer periphery. A C-shaped shift arm 260 (Figure 17) is fitted in this groove 258c. The shift arm 260 has a base end connected to one end of a parking brake overriding lever shaft 261. The shaft 261 has a mid-portion extending outwardly through a boss 257a on the housing 257, and supported pivotally at 264 in the boss 257a. An overriding lever 262 is secured to the other end of the shaft 261 which is located outwardly of the housing 257. The lever 262 has a free end connected to one end of the inner member of an overriding operating cable 263. The lever 262 can be associated with a "neutral" gear mechanism such that "neutral" is selected when the action of the parking brake is overridden.

As shown in Figure 12, a carrier handle 264 is provided behind the seat 213 for facilitating bodily transportation of the motorcycle. A portion of the inner member 263a of the operating cable 263 is exposed under the carrier handle 264 substantially parallel therewith. The end of the inner member 263a is connected to the handle 264, as is the end of the outer member 263b, and these members extend through the seat post 212 to the lever 262. That portion of the inner member 263a which is parallel to the handle 264 is provided midway with a grip 265 by which the cable inner member may be conveniently held.

In the arrangement as described above, the shifter 258 is normally urged into the dog tooth clutch engaged condition by the spring 259, and keeps the shift arm 260 pulled in the direction in which the shifter 258 is urged. The shift arm 260 in turn keeps the cable inner member 263a pulled via the shaft 261 and the lever 262, so that the exposed end portion of the cable inner 263a remains parallel to the horizontal portion of the handle 264 as shown in Figure 12.

If it is now desired to move the vehicle after the front vehicle body frame portion is locked against swinging, and the parking brake engaged, it is sufficient to hold the grip 265 under the handle 264 and raise the grip 265 as shown by a chain line in Figure 12. As a result, the cable inner member 263a is pulled upwardly, and the lever 262 is rotated to rotate the shift arm 260 via the shaft 261 to move the shifter 258 away from the flange 255a along the axle 256 overcoming the force of the spring 259, whereby the rotative connection between the output shaft 255 and the axle 256 is broken, consequently, the rear wheels 220 are now freely movable, thereby permitting easy movement of the vehicle even after its front vehicle body frame portion has been locked, and the parking brake engaged. After the vehicle has been moved as required, the grip 265 is released, and the shifter 258 is thereby sprung back into the dogtooth clutch engaged condition to restore the operative condition of the parking brake. As the grip for effecting the parking brake overriding operation is provided close to the carrier handle behind the seat, the carrier handle for the movement of the vehicle and the grip for overriding operation can be grasped together easily. This feature renders it very easy to handle the vehicle when parking it.

## Claims

1. A three-wheeled vehicle having one front wheel (9) (209) and two rear wheels (20) (220), separate front and rear body frame portions (2, 3) (202, 203) that are relatively swingable, and a locking mechanism (31, 41) (131, 141) (231, 251/252) provided between the front and rear body frame portions (2, 3) (202, 203) for locking these portions against relative swinging; characterised in that the locking mechanism is included in a parking brake apparatus that further includes a parking brake mechanism (46) (145, 148) (246, 254) operable to brake the vehicle, and an operating means (24) (224) adapted for operating both the locking mechanism and the parking brake mechanism.

2. A three-wheeled vehicle as claimed in claim 1, wherein the front body frame portion (2) is swingable relative to the rear body frame portion (3) about a stationary shaft (15) secured in the rear body frame portion; and wherein the locking mechanism comprises a lock plate (31) secured to the shaft, a case (26) surrounding the shaft, a pawl member (41) provided in the case and normally urged into an inoperative position, and a linkage (34, 43) adapted for bringing the pawl member into operative engagement with the lock plate; wherein there are brake cables (45, 46) connected to the linkage; and wherein the linkage is rotatable by the operating means (24) into its operative position to move the pawl member and the brake cables into their respective operative positions.

3. A three-wheeled vehicle as claimed in claim 2 and further including a release mechanism (39) disposed between the pawl member and the linkage for urging the pawl member into its operative position upon rotation of the linkage.

4. A three-wheeled vehicle as claimed in claim 2, wherein the brake cables comprise a first cable (45) connected to a brake operating member (44), and a second cable (46) connected to a brake unit; and wherein the linkage comprises an operating link (34) which is rotatable for bringing the pawl member (41) into its operative position, and brake operating link (43) having one end connected rotatably to the operating link (34) and another end restrained against movement in one direction, the other end being connected to the first cable (45) and a mid-portion of the brake operating link being connected to the second cable (46).

5. A three-wheeled vehicle as claimed in claim 1, wherein the operating means (24) actuates a first link (134a) and a second link (134b) which are supported on a shaft (133) in generally L-shaped form for pivoting together, the first link (134a) being connected to the operating means (24) and the second link (134b) being connected to an intermediate portion of a brake cable 145/146) so as to be unoperated during braking operation effected other than by actuation of said operating means (24), and so as to effect parking brake operation upon actuation of the operation means (24); and wherein the locking means includes a restraining means (131) in the rear body frame portion (3), and a locking arm (141) operatively connected with the first link (134a) for engagement with the restraining means (131) to lock the front body frame portion (2) against swinging relative to the rear body frame portion (3) upon actuation of the operating means (24).

6. A three-wheeled vehicle as claimed in claim 5 and including a spring (142) by which the first link (134a) and the locking arm (141) are connected with each other.

7. A three-wheeled vehicle as claimed in any one of the preceding claims, wherein the operating means (24) is provided under a driver's seat (13).

8. A three-wheeled vehicle as claimed in claim 7 as appendant to any one of claims 2 to 6, wherein the operating means (24) is provided under the driver's seat (13), and is connected to the locking mechanism by a linear element (25) (125) which is pulled or pushed by the operating means to bring the locking mechanism into its operative position.

9. A three-wheeled vehicle as claimed in claim 1, wherein the locking mechanism comprises a lock plate (231) secured in one of the front and rear body frame portions (202, 203) in the vicinity of the area where the front body frame portion is swingably connected to the rear body frame portion, and a pair of calipers (251, 252) rotatably supported in the other of the front and rear body frame portions and adapted for holding the lock plate therebetween at one end thereof, one of the calipers being connected to a brake cable (246) for movement therewith to hold the lock plate between the calipers upon movement of the brake cable in a direction which actuates the brake.

10. A three-wheeled vehicle as claimed in any one of the preceding claims and further including a clutch mechanism (255a/b, 258a) associated with an axle (256) for one of the wheels for which the parking brake mechanism is provided, this clutch mechanism being releasable to override the effect of the operating means of the parking apparatus on the parking brake mechanism.

11. A three-wheeled vehicle as claimed in claim 10 and including an operating means (265) for the clutch mechanism that is provided behind the driver's seat (13) in close proximity to a carrier handle (264) of the vehicle.

**Revendications**

1. Véhicule à trois roues comportant une seule roue avant (9) (209) et deux roues arrière (20) (220), des parties distinctes antérieure et postérieure du châssis (2, 3) (202, 203) qui peuvent osciller l'une par rapport à l'autre, et un mécanisme de verrouillage (31, 41) (131, 141) (231, 251/252) intercalé entre lesdites parties antérieure et postérieure du châssis (2, 3) (202, 203) pour empêcher ces parties d'osciller l'une par rapport à l'autre; caractérisé par le fait que le mécanisme de verrouillage fait partie d'un dispositif de parquage qui comprend en outre un mécanisme à frein de stationnement (46) (145, 146) (246, 254) actionnable pour freiner le véhicule, et un moyen d'actionnement (24) (224) destiné à actionner à la fois ledit mécanisme de verrouillage et ledit mécanisme à frein de stationnement.

2. Véhicule à trois roues selon la revendication 1, caractérisé par le fait que la partie avant (2) du châssis peut osciller, par rapport à la partie arrière (3) du châssis, autour d'un arbre stationnaire (15) assujetti à la partie arrière du châssis; par le fait que le mécanisme de verrouillage comprend une plaque de verrouillage (31) fixée à l'arbre, un boîtier (26) entourant cet arbre, un cliquet (41) logé dans le boîtier et chargé normalement à une position inefficace, ainsi qu'une articulation (34, 43) destinée à amener ledit cliquet efficacement en prise avec la plaque de verrouillage; par le fait que des câbles (45, 46) de frein sont reliés à l'articulation; et par le fait que l'articulation peut être mise en rotation par le moyen d'actionnement (24) jusqu'à sa position efficace afin de déplacer le cliquet et les câbles de frein à leurs positions respectives d'efficacité.

3. Véhicule à trois roues selon la revendication 2 et comportant en outre un mécanisme de détente (39) intercalé entre le cliquet et l'articulation afin de pousser ledit cliquet à sa position efficace lors de la rotation de l'articulation.

4. Véhicule à trois roues selon la revendication 2, caractérisé par le fait que les câbles de frein consistent en un premier câble (45) relié à un organe de manoeuvre (44) du frein, ainsi qu'un second câble (46) relié à une dispositif de freinage; et par le fait que l'articulation comprend une patte d'actionnement (34) qui peut tourner pour amener le cliquet (41) à sa position efficace, ainsi qu'une patte (43) d'actionnement du frein, dont l'une des extrémités est reliée de manière rotative à la patte d'actionnement (34) et son autre extrémité est empêchée de se déplacer dans une direction, cette autre extrémité étant reliée au premier câble (45) et une zone médiane de la patte d'actionnement du frein étant reliée seond câble (46).

5. Véhicule à trois roues selon la revendication 1, caractérisé par le fait que le moyen d'actionnement (24) actionne une première patte (134a) et une seconde patte (134b) qui sont supportées par un tourillon (133) selon une configuration générale en L afin de pivoter ensemble, la première patte (134a) étant reliée au moyen d'actionnement (24) et la seconde patte (134b) étant reliée à une région intermédiaire d'un câble de freinage (145/146) de façon à ne pas être actionnée lorsque l'opération de freinage est assurée d'une manière autre que par la manoeuvre dudit moyen d'actionnement (24), et de façon à déclencher le fonctionnement du frein de stationnement lorsque ledit moyen d'actionnement (24) est mis en action; et par le fait que le moyen de verrouillage comporte un moyen de blocage (131) dans la partie arrière (3) du châssis du véhicule, ainsi qu'un bras de verrouillage (141) relié efficacement à la première patte pour venir en prise avec le moyen de blocage (131) afin d'interdire à la partie avant (2) du châssis d'effectuer une oscillation par rapport à la partie arrière (3) du châssis lorsque le moyen d'actionnement (24) est mis en action.

6. Véhicule à trois roues selon la revendication 5 et comportant un ressort (142) au moyen duquel la première patte (134a) et le bras de verrouillage (141) sont reliés l'un à l'autre.

7. Véhicule à trois selon l'une quelconque des revendications précédentes, caractérisé par le fait que le moyen d'actionnement (24) est situé sous le siège (13) d'un conducteur.

8. Véhicule à trois roues selon la revendication 7, dépendant de l'une quelconque des revendications 2 à 6, caractérisé par le fait que le moyen d'actionnement (24) est situé sous le siège (13) du conducteur et est relié au mécanisme de verrouillage par un élément linéaire (25) (125) qui est tiré ou poussé par le moyen d'actionnement afin d'amener le mécanisme de verrouillage à sa position efficace.

9. Véhicule à trois roues selon la revendication 1, caractérisé par le fait que la mécanisme de verrouillage comporte une plaque de verrouillage (231) assujettie à l'une des parties antérieure et postérieure du châssis (202, 203) à proximité de la zone dans laquelle la partie avant du châssis est reliée de manière oscillante à la partie arrière du châssis, ainsi qu'une paire de mâchoires (251, 252) supportées à rotation dans l'autre desdites parties antérieure et postérieure du châssis et destinées à maintenir la plaque de verrouillage entre ces dernières à l'une extrémités, l'une desdites mâchoires étant reliée à un câble de freinage (246) de façon à se déplacer avec lui, afin de maintenir la plaque de verrouillage entre le mâchoires lorsque le câble de freinage accomplit un mouvement dans une direction provoquant l'actionnement du frein.

10. Véhicule à trois roues selon l'une quelconque des revendications précédentes et comportant en outre un mécanisme d'accouplement (255a/b, 258a) associé à un arbre de roue (256) pour l'une des roues équipée du mécanisme à frein de stationnement, ce mécanisme d'accouplement pouvant être débrayé pour inhiber l'action que le moyen d'actionnement du dispositif de parquage exerce sur le mécanisme à frein de stationnement.

11. Véhicule à trois roues selon la revendication 10 et comportant un organe (265) du mécanisme d'accouplement, qui est placé derrière le siège (13) d'un conducteur au voisinage immédiat d'un arceau de soulèvement (264) du véhicule.

**Patentansprüche**

1. Dreirädriges Fahrzeug mit einem Vorderrad (9) (209) und zwei Hinterrädern (20), (220), voneinander getrennten und relative zueinander verschwenkbaren vorderen und hinteren Rahmenteilen (2, 3) (202, 203) und einem zwischen den vorderen und hinteren Rahmenteilen (2, 3) (202, 203) vorgesehenen und diese Teile gegen eine Relativverschwenkung verriegelnden Verriegelungsmechanismus (31, 41), (131, 141) (231, 251/252), dadurch gekennzeichnet, daß der Verriegelungsmecahnismus in einem Parkbremsgerät enthalten ist, das weiters einen zum Abbremsen des Fahrzeuges betätigbaren Parkbremsmechanismus (46) (145, 148) (246/254) und eine sowohl zum Betätigen des Verriegelungsmechanismus als auch zum Betätigen des Parkbremsmechanismus bestimmte Betätigungseinrichtung (24) (224) aufweist.

2. Dreirädriges Fahrzeug nach Anspruch 1, worin der vordere Rahmenteil (2) relativ zum hinteren Rahmenteil (3) um eine am hinteren Rahmenteil festgelegte ortsfeste Welle (15) verschwenkbar ist, der Verriegelungsmechanismus eine an der Welle festgelegte Verriegelungsplatte (31), ein die Welle umgebendes Gehäuse (26), eine im Gehäuse vorgesehene und normalerweise in eine unwirksame Lage gebrachte Klaue (41) und eine die Klaue in Eingriff mit der Verriegelungsplatte bringendes Ge-

stänge (34, 43) aufweist, wobei mit dem Gestänge vergundene Bremsseile (45, 46) vorgesehen sind und das Gestänge durch die Betätigungseinrichtung (24) in Wirkstellung verdrehbar ist, um die Klaue und die Bremsseile in ihre zugehörigen Wirkstellungen zu bringen.

3. Dreirädriges Fahrzeug nach Anspruch 2, worin weiters ein zwischen der Klaue und dem bei Verdrehung die Klaue in Wirkstellung bringenden Gestänge befindlicher Auslösemechanismus (39) vorhanden ist.

4. Dreirädriges Fahrzeug nach Anspruch 2, worin die Bremsseile ein mit einem Bremsbetätigungsteil (44) verbundenes erstes Seil (45) und eine mit einer Bremseinheit verbundenes zweites Seil (46) aufweisen und worin das Gestänge ein durch Verdrehen die Klaue (41) in Wirkstellung überführendes Betätigungsglied (34) und ein mit einem Ende mit dem Betätigungsglied (34) drehbar verbundenes und mit einem anderen Ende an einer Bewegung in einer Richtung gehindertes Bremsbetätigungsglied (43) aufweist, wobei das andere Ende mit dem ersten Seil (45) und ein Mittelabschnitt des Frembetätigungsgliedes mit dem zweiten Seil (46) verbunden ist.

5. Dreirädriges Fahrzeug nach Anspruch 1, worin die Betätigungseinrichtung (24) zunächst ein erste Glied (134a) und ein zweites Glied (134b) betätigt, wobei diese Glieder auf einer Welle (133) in im wesentlichen L-förmiger Form zum gemeinsamen Verschwenken abgestützt sind, das erste Glied (134a) mit der Betätigungseinrichtung (24) und das zweite Glied (134b) mit einem Zwischenbereich eines Bremsseiles (145/146) solcherart verbunden ist, daß es bei einem anderen als dem durch Betätigen der Betätigungseinrichtung (24) ausgelösten Bremsvorgang unbetätigt bleibt und einen Parkbremsvorgang bei Betätigen der Betätigungseinrichtung (24) bewirkt, und worin die Verriegelungseinrichtung im hinteren Rahmenteil (3) eine Hemmeinrichtung (131) und einem mit dem ersten Glied (134a) in Wirkverbindung stehenden und dadurch mit der Hemmeinrichtung (131) zum Zwecke des Verriegelns des vorderen Rahmenteils (2) gegen ein Verschwenken relativ zum Hinteren Rahmenteil (3) bei Betätigung der Betätigungseinrichtung (24) in Eingriff bringbaren Verriegelungsarm (141) aufweist.

6. Dreirädriges Fahrzeug nach Anspruch 5 mit einer Feder (142), durch welche das erste Glied (134a) und der Verriegelungsarm (141) miteinander verbunden sind.

7. Dreirädriges Fahrzeug nach irgendeinem der vorhergehenden Ansprüche, worin die Betätigungseinrichtung (24) unter einem Fahrersitz (13) vorgesehen ist.

8. Dreirädriges Fahrzeug nach Anspruch 7, soweit dieser von irgendeinem der Ansprüche 2 bis 6 abhängig ist, worin die Betätigungseinrichtung (24) unter dem Fahrersitz (13) angeordnet und mit dem Verriegelungsmechanismus durch ein lineares Element (25) (125) verbunden ist, das durch die Betätigungseinrichtung gezogen oder geschoben wird, um den Verriegelungsmechanismus in Wirkstellung zu bringen.

9. Dreirädriges Fahrzeug nach Anspruch 1, worin der Verriegelungsmechanismus eine in einem von vorderem und hinterem Rahmenteil in Nähe jenes Bereiches befestigte Verriegelungsplatte (231) aufweist, wo der vordere Rahmenteil verschwenkbar mit dem hinteren Rahmenteil verbunden ist, und weiters eine Spannzange (251, 252) aufweist, die im anderen des vorderen bzw. des rückwärtigen Rahmenteils drehbar abgestützt ist und dazu eingerichtet ist, die Verriegelungsplatte an einem ihrer Enden zwischen beiden Schenkeln zu halten, wobei einer der Schenkel mit einem Bremsseil (246) verbunden und zusammen hiemit bewegbar ist, um die Verriegelungsplatte zwischen den Schenkeln der Spannzange zu halten, wenn das Bremsseil in einer die Bremse betätigenden Richtung bewegt wird.

10. Dreirädriges Fahrzeug nach irgendeinem der vorhergehenden Ansprüche, worin weiters ein Kupplungsmechanismus (255a/b, 258a) vorgesehen ist, der einer Achse (256) für eines der mit dem Parkbremsmechanismus ausgestatteten Räder zugeordnet ist, wobei dieser Kupplungsmechanismus solcherart auslöbar ist, daß er die Wirkung der Betätigungseinrichtung des Parkbremsgerätes auf den Parkbremsmechanismus übertrifft.

11. Dreirädriges Fahrzeug nach Anspruch 10, worin eine Betätigungseinrichtung (265) für den Kupplungsmechanismus vorgesehen ist, die hinter einem Fahrersitz (13) nahe dem Traggriff (264) des Fahrzeugs angeordnet ist.

# FIG . 1

# FIG . 2

1

**FIG.3**

**FIG.4**

# FIG.5

# FIG.6

# FIG.8

# FIG.9

# FIG . 7

13

23

24

12

125

136

134a

140

141

131a

133

9

8

20

148

145

134b

142

131

**FIG.10**

**FIG.12**

**FIG.11**

5

FIG.14

FIG.13

# FIG .15

# FIG .17

# FIG.16